# EUROPEAN PATENT APPLICATION

(11) **EP 4 753 234 A1**
(43) Date of publication of application: **03.06.2026**
(21) Application number: 24849576.4
(22) Date of filing: 30.07.2024
(51) Int. Cl.: H04L 67/12

(54) **METHOD FOR PROVIDING SERVICE IN WIRELESS COMMUNICATION SYSTEM**

(30) Priority: 31.07.2023 KR 20230099967
(71) Applicant: Samsung Electronics Co., Ltd., Suwon-si, Gyeonggi-do 16677 (KR)
(72) Inventor: LEE, Hoyeon, Suwon-si, Gyeonggi-do 16677 (KR); KIM, Hyesung, Suwon-si, Gyeonggi-do 16677 (KR); MOON, Sangjun, Suwon-si, Gyeonggi-do 16677 (KR); SUH, Dongeun, Suwon-si, Gyeonggi-do 16677 (KR)
(74) Representative: HGF
(86) International application number: PCT/KR2024/011152
(87) International publication number: WO 2025/029009

(57) **Abstract**

The present disclosure relates to a 5G or 6G communication system for supporting higher data transmission rates. An operation of a network entity in a wireless communication system, according to one embodiment of the present disclosure, may comprise the operations of: receiving a message of request for an integrated sensing and communication (ISAC) service from an application function (AF); authenticating, on the basis of the request message, the ISAC service requested by the AF; and transmitting ISAC service-related information including at least one from among an identifier for identifying the ISAC service, ISAC profile information, and information related to a sensing network function (SNF) selected by the network entity.

## Description

### [Technical Field]

The disclosure relates to a device and a method for providing a service in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

According to an embodiment of the disclosure, a method and a device for providing a service in a wireless communication system may be provided.

### [Technical Solution]

An operation of a network entity in a wireless communication system according to an embodiment of the disclosure may include an operation of receiving a request message for an integrated sensing and communication (ISAC) service from an application function (AF), an operation of performing authentication for the ISAC service requested by the AF based on the request message, and an operation of transmitting ISAC service-related information including at least one of an identifier identifying the ISAC service, ISAC profile information, and information on a sensing network function (SNF) selected by the network entity.

A network entity in a wireless communication system according to an embodiment of the disclosure includes a transceiver; and a controller. The controller may receive a request message for an integrated sensing and communication (ISAC) service from an application function (AF), perform authentication for the ISAC service requested by the AF based on the request message, and control to transmit ISAC service-related information including at least one of an identifier identifying the ISAC service, ISAC profile information, and information on a sensing network function (SNF) selected by the network entity.

### [Advantageous Effects]

A method and a device according to an embodiment of the disclosure may efficiently allocate and use radio resources by combining sensing and communication systems.

### [Brief Description of Drawings]

FIG. 1 illustrates a mobile communication system structure according to an embodiment of the disclosure.
FIG. 2 illustrates a structure for providing an integrated sensing and communication service in a wireless communication system according to an embodiment of the disclosure.
FIG. 3 illustrates a procedure for configuring an ISAC profile in a network to provide various integrated sensing and communication services in a wireless communication system according to an embodiment of the disclosure.
FIG. 4 illustrates a procedure for determining ISAC service profile information using AI technology in a wireless communication system according to an embodiment of the disclosure.
FIG. 5 illustrates a procedure for deleting ISAC service profile information triggered by an SNF in a wireless communication system according to an embodiment of the disclosure.
FIG. 6 is a block diagram illustrating a UE according to an embodiment of the disclosure.
FIG. 7 is a block diagram illustrating a network entity according to an embodiment of the disclosure.

### [Mode for Carrying out the Invention]

Hereinafter, an embodiment of the disclosure is described with reference to the accompanying drawings.

In describing the disclosure, the description of technologies that are known in the art and are not directly related to the present invention is omitted. This is for further clarifying the gist of the present disclosure without making it unclear. The terms as used herein are defined considering the functions in the present disclosure and may be replaced with other terms according to the intention or practice of the user or operator. Therefore, the terms should be defined based on the overall disclosure.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skill in the art of the category of the present disclosure. The present invention is defined only by the appended claims. The same reference numeral denotes the same element throughout the specification. When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

Hereinafter, a base station (BS) is an entity that performs resource allocation of a UE, and may be at least one of a gNode B, eNode B, Node B, (or xNode B (where x is an alphabetic character including g and e)), a radio access unit, a base station controller, a satellite, an airborne, or a node on network. The user equipment (UE) may include a mobile station (MS), vehicle, satellite, airborne, cellular phone, smartphone, computer, or multimedia system capable of performing communication functions. In the disclosure, downlink (DL) refers to a wireless transmission path of signal transmitted from the base station to the terminal, and uplink (UL) refers to a wireless transmission path of signal transmitted from the terminal to the base station. Additionally, a sidelink (SL) meaning a radio transmission path of a signal transmitted from a UE to another UE may exist.

Although LTE, LTE-A, or 5G systems may be described below as an example, the embodiments may be applied to other communication systems having a similar technical background or channel pattern. For example, embodiments of the disclosure may also encompass 5G-advance or NR-advance or 6th generation mobile communication technology (6G) developed after 5G mobile communication technology (or new radio, NR). The following 5G may be a concept encompassing the legacy LTE, LTE-A and other similar services. Further, the embodiments may be modified in such a range as not to significantly depart from the scope of the present invention under the determination by one of ordinary skill in the art and such modifications may be applicable to other communication systems.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments, a "...unit" may include one or more processors.

Hereinafter, the disclosure relates to a device and a method for providing an integrated sensing and communication service in a wireless communication system. Specifically, the disclosure describes a technology for configuring, controlling, and managing integrated sensing and communication service-related information in a mobile communication network system providing an integrated sensing and communication service function.

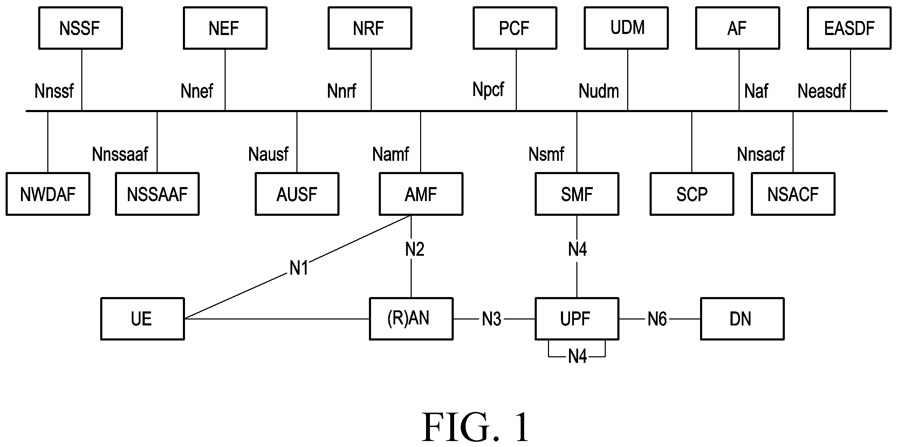

FIG. 1 illustrates a mobile communication system structure according to an embodiment of the disclosure.

Referring to FIG. 1, a 5G system (5GS), which is a mobile communication system, may be composed of a UE (UE), a base station ((R)AN), and a 5G core network. Referring to FIG. 1, the 5G core network may be composed of network functions (NFs) except for the UE, (R)AN, a data network (DN), and an application function (AF) of FIG. 1. Specifically, the 5G core network may be composed of an access and mobility management function (AMF), a session management function (SMF), a user plane function (UPF), a policy control function (PCF), a unified data management (UDM), a unified data repository (UDR), a network repository function (NRF), a network data analytics function (NWDAF), a network exposure function (NEF), a network slicing selection function (NSSF), a network slice-specific authentication and authorization function (NSSAAF), an authentication server function (AUSF), a service communication proxy (SCP), a network slice access control function (NSACF), an edge application server discovery function (EASDF), or the like. The UE (UE) may access the 5G core network through the base station ((R)AN). Hereinafter, UE may be referred to as a UE, and (R)AN may be referred to as a base station. Further, the 5G core network may further include an application function (AF) and a data network (DN).

According to an embodiment, the AMF is a network function (NF) managing wireless network access and mobility for a UE.

The SMF is an NF managing a session for a UE, and session information includes quality of service (QoS) information, charging information, and information on packet processing.

The UPF is an NF processing user traffic (e.g., user plane traffic), and is controlled by the SMF.

The PCF is an NF managing an operator policy (PLMN policy) for providing a service in a wireless communication system. Further, the PCF may be divided into a PCF in charge of an access and mobility (AM) policy and UE policy and a PCF in charge of session management (SM) policy. The AM/UE policy PCF and the SM policy PCF may be logically or physically separated NFs, or may be logically or physically a single NF.

The UDM is an NF storing and managing subscription information (UE subscription) of a UE.

The UDR is an NF or a database (DB) that stores and manages data. The UDR may store subscription information for the UE and may provide the UDM with the subscription information for the UE. Further, the UDR may store operator policy information and may provide operator policy information to the PCF.

The NRF registers and manages NF functions of the 5G core network, and functions to discover and select an NF satisfying required functions.

The NWDAF functions to analyze data and provide analytics information to NFs of the 5G core network, a base station, a UE, an AF, or the like.

The NEF exposes 5G network core functions to the outside and may be used for communication between an AF and the 5G core network.

The AF may be an NF providing a function for a service according to the disclosure.

The DN may refer to a data network capable of providing an operator service, internet access, or a third party service, or the like.

Integrated sensing and communication (ISAC) refers to a technology for efficiently utilizing radio resources by combining sensing and communication systems, and is being actively researched in both academia and industry considering the benefits of enhancing performance of the network itself (e.g., providing optimization input for network coordination), and the sensing range is being extended as a function provided by the network.

A 5G system, which is a fifth-generation cellular system, may revolutionize industries and enhance everyday experiences with faster connection speeds, ultra-low latency, and faster bandwidth. Including a sensing function in a 5G communication network is predicted as the easiest way to achieve ISAC and a new capability of 5G+/6G.

ISAC may be used in various scenarios such as a smart city, smart transportation, UAV, smart industry, smart home, and weather monitoring. Some examples are as follows.
- Smart traffic sensing: A base station may sense road conditions along highways or railways to continuously detect intruders (e.g., vulnerable pedestrians and animals), thereby enhancing the efficiency of traffic management and safety supervision. Further, a sensing result may be generated using sensing data derived from a 3GPP wireless signal affected by an object or an environment, and the result is exposed by the network to a trusted third party for building an HD dynamic map for autonomous driving.
- UAV sensing: A mobile network may provide a type of sensing service for UAVs to enhance the accuracy and efficiency of public safety supervision and management. For example, a UAV flies to a destination along a tracked flight path, or a behavior deviating from the path is detected by a base station. Further, the base station may detect an intruder flying in a flight path protection zone of the UAV, and protection from illegal or non-cooperative UAVs against potential collision and illegal use should be provided.
- Flood sensing in a smart city: A base station may sense a road surface using radio waves and, when a manager determines that a flood is coming, people in the area may be notified to evacuate the area.
- Sensing for traffic management at a tourist site: A base station at an entrance and an exit of a tourist site may detect people and vehicles entering and exiting the site and analyze traffic conditions. When traffic congestion occurs, a management system may notify a tourism manager to restrict traffic.
- AGV sensing and tracking in a factory: Based on sensing measurement data, a sensing entity may detect proximity of an AGV and a worker and warn the worker to avoid a potential hazard.
- Rainfall monitoring: A 5GS may process a sensing result through attenuation analysis of a wireless signal, and based on the sensing result, a weather application may fetch rainfall information and notify a farmer. The farmer may then plan irrigation, drainage, and fertilization for crops on the farm.

Intruder detection in a smart home: When a homeowner is not home, a UE or a 5GC may process a sensing result and determine whether there is a potential intruder by analyzing a difference between a 5G signal and a reflected signal.

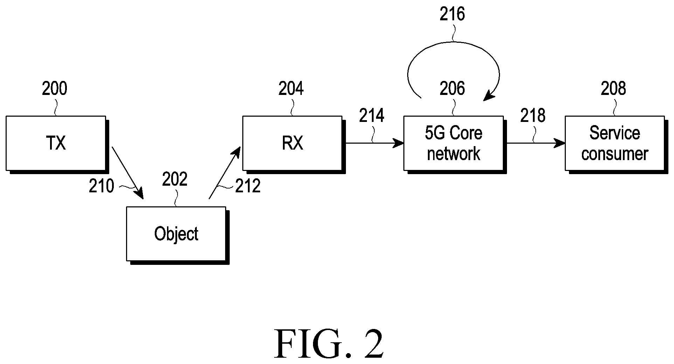

FIG. 2 illustrates a structure for providing an integrated sensing and communication service in a wireless communication system according to an embodiment of the disclosure.

Referring to FIG. 2, in step 210, a sensing transmitter (TX) 200 may transmit a signal toward an object 202.

In step 212, a sensing receiver (RX) 204 may receive and/or sense the signal transmitted by the TX 200 reflected and/or diffracted by the object 202.

In step 214, the RX 204 may deliver information collected based on the signal reflected and/or diffracted in step 212 to a 5G core network 206.

In step 216, the 5G core network 206 may analyze the collected information and derive an analysis result.

In step 218, the 5G core network 206 may transmit (notify) the analysis result to a service consumer 208.

The TX 200 of FIG. 2 is a type of sensor and may be a UE or a base station.

The RX 204 of FIG. 2 is a type of sensor and may be a UE or a base station.

The 5G core network 206 of FIG. 2 may be one of the NFs of the 5G core network illustrated in FIG. 1 or may be a new NF.

The service consumer 208 of FIG. 2 may be a UE, an AF, or one of the NFs of the 5G core network.

For example, when providing an intruder detection in smart home service based on the structure for providing the integrated sensing and communication service illustrated in FIG. 2, a TX 200 device installed in a home periodically transmits a signal, a nearby base station 204 receives the signal, and the base station 204 may deliver processed or unprocessed information to the 5G core network 206. The 5G core network 206 analyzes received information and, when an intruder is detected (for convenience of description of embodiments described below, this is referred to as an integrated sensing and communication service analysis result value), may transmit an intruder detection notification message to a homeowner UE 208.

A mobile communication system according to an embodiment of the disclosure may store and manage integrated sensing and communication service-related information defining an integrated sensing and communication service to provide various integrated sensing and communication services. For the description of embodiments described below, the integrated sensing and communication service-related information is referred to as an ISAC service profile. The ISAC service profile may include at least one of the information in Table 1, ISAC service profile, below.

**[Table 1]**

| |
|---|
| - An identifier identifying an ISAC service |
| - A service type |
| - A service area |
| - A service time |
| - Sensor-related information installed in a service area |
| - A maximum number of sensors |
| - A minimum number of sensors |
| - A service provider identifier |
| - A service consumer identifier |
| - An energy consumption mode |
| - A frequency |
| - A privacy indicator |

The identifier identifying an ISAC service may be an identifier distinguishing one ISAC service, and one ISAC service may be defined by one ISAC profile.

The service type may indicate a service scenario (e.g., smart city, smart transportation, UAV, smart industry, smart home, etc.), a service characteristic, a required QoS, or the like.

The service area may indicate area information subject to sensing. For example, in the case of an intruder detection service in a home, a location information of the home may be indicated.

The service time may include start/activation time and end/deactivation time information of an ISAC service. For example, in the case of an intruder detection service in a home, a service provider may activate the ISAC service during a time when a homeowner is away.

The sensor-related information installed in the service area may include a sensor type (UE, RAN), a sensor identifier, capabilities, an installation location, or the like. For example, in the case of an intruder detection service in a home, it may be a TX or RX node pre-installed in the home.

The minimum number of sensors may mean a minimum number of sensors required to derive a valid analysis result value or an analysis result value satisfying a required accuracy. For example, as the number of sensors increases, the amount of information that may be sensed may increase, and accordingly, when high-accuracy sensing is required, the required minimum number of sensors may increase.

The maximum number of sensors may mean a number of sensors beyond which no valid change occurs in the analysis result value even when more sensors are used, i.e., a number of sensors at which the accuracy of the result becomes saturated even when more sensors are used. By not using sensors exceeding the maximum number of sensors, energy saving of entities required for sensing illustrated in FIG. 2 may be achieved.

The service provider identifier may be an entity creating and activating an ISAC service. The service provider may be an AF, a UE, or the like.

The service consumer identifier may be an entity receiving a notification message for an analysis result of an ISAC service. For example, in the case of an intruder detection service in a home, when an intruder is detected, it may be the homeowner UE 208 receiving the intruder detection notification message.

The energy consumption mode may indicate a power consumption mode consumed in using an ISAC service. For example, low-power energy consumption may be required even when the accuracy of the analysis result is slightly lowered. Alternatively, it may indicate a maximum amount of energy used in using an ISAC service.

The frequency may be frequency information to be used in using an ISAC service. For example, as the frequency band is wider, the amount of information that may be sensed may increase, and accordingly, when high-accuracy sensing is required, a high frequency band may be required.

A privacy indicator may indicate a degree of privacy required for an ISAC service. For example, a user may exclude specific information from the information sensed by the ISAC service, or include only specific information. For example, for privacy protection, a user may exclude sound information and allow only recognition of a shape rather than specific/clear recognition of an object.

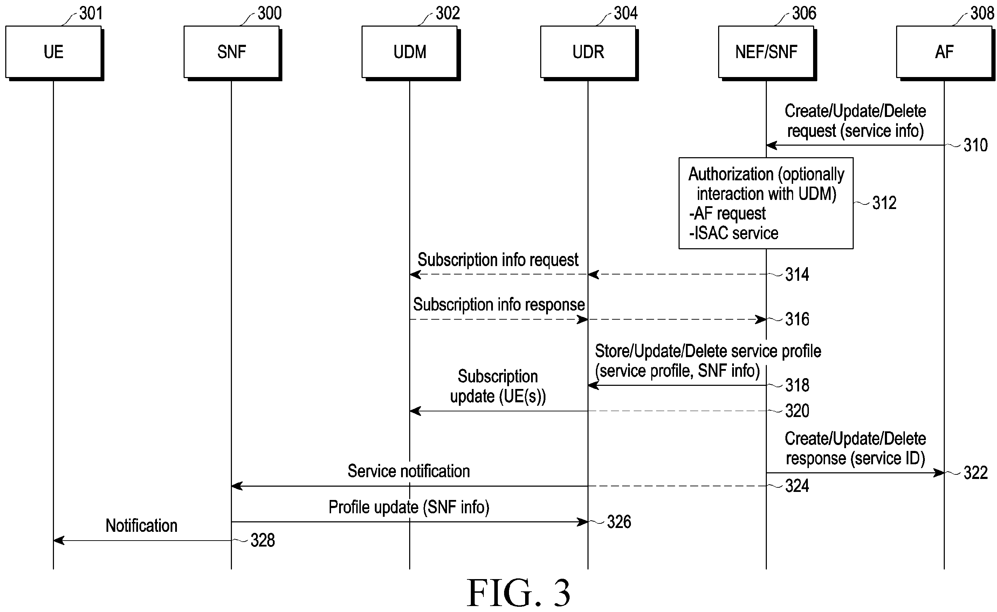

FIG. 3 illustrates a procedure for configuring an ISAC profile in a network to provide various integrated sensing and communication services in a wireless communication system according to an embodiment of the disclosure.

A mobile communication network according to an embodiment of the disclosure may generate ISAC service-related information using the procedure illustrated in FIG. 3. Referring to FIG. 3, in step 310, an AF 308 serving as a service provider may transmit a creation request message to an NF 306 of a 5G core network. The NF 306 may be an NEF or an SNF (sensing network function) 306. Alternatively, the NF 306 may be an NF in which the NEF and the SNF are collocated. The SNF may be an NF managing and providing an integrated sensing and communication service. The SNF may be one of the NFs constituting the 5G core network illustrated in FIG. 1 (e.g., PCF, NWDAF, etc.). Alternatively, the SNF may be a new NF. The creation request message may be a request message for creating a new ISAC service profile. The creation request message may include an identifier of the AF. Further, the creation request message may include at least one of the ISAC profile illustrated in Table 1.

In step 312, the NEF/SNF 306 may authenticate the creation request message received from the AF 308 in step 310. Further, the NEF/SNF 306 may perform authentication for the ISAC service requested by the AF 308. For this purpose, in step 314, the NEF/SNF 306 may request subscription information from the UDR 304 or the UDM 302. The subscription information request message may be a message requesting a service available to a subscriber, more specifically, information on an ISAC service available to the subscriber. The subscription information request message may include at least one of the AF identifier, the service provider identifier, the service type, and the service area received in step 310. The UDM 302 or the UDR 304 may determine whether a subscriber identified by the AF identifier or the service provider identifier is able to use the service type. Alternatively, the UDM 302 or the UDR 304 may determine what service type is available to a subscriber identified by the AF identifier or the service provider identifier.

In step 316, the UDR 304 or the UDM 302 may transmit a subscription information response message to the NEF/SNF 306. The subscription information response message may include service type information available to the subscriber. The NEF/SNF 306 may authenticate the request message received in step 310 based on information configured in the NEF/SNF 306 and information received from the UDR 304 or the UDM 302.

In step 312, upon successful authentication, the NEF/SNF 306 may determine to create an ISAC service profile corresponding to the ISAC service requested by the AF. The NEF/SNF may allocate an identifier identifying the ISAC service. Further, the NEF/SNF may select an NF to provide the ISAC service, and the NF to provide the ISAC service may be the SNF 306, or may be another SNF 300. In step 318, the NEF/SNF 306 may store newly created ISAC service-related information in the UDR 304. The newly created ISAC service-related information may include at least one of the identifier identifying the ISAC service allocated by the NEF/SNF, the ISAC profile information illustrated in Table 1, and the SNF information selected by the NEF/SNF. The SNF information may include at least one of an SNF identifier and an SNF address.

In step 320, the NEF/SNF may identify sensor information, service provider, or service consumer information related to the newly created ISAC service. If there is sensor, service provider, or service consumer information related to the ISAC service, in step 320, the NEF/SNF may update subscriber information identified by/corresponding to the sensor, service provider, or service consumer information. For example, the NEF/SNF may store at least one of the ISAC service profile (e.g., service type, identifier identifying the ISAC service, etc.) associated with/used by the subscriber in the subscription information of the subscriber identified by the sensor, service provider, or service consumer information.

In step 322, the SNF/NEF may send a creation response message to the AF to notify that the creation request message requested in step 310 has been processed. The creation response message may include information identifying the newly created ISAC service (e.g., an identifier identifying the ISAC service).

If an SNF 300 different from the NEF/SNF 306 is to provide the newly created ISAC service, in step 324, the NEF/SNF or the UDR 304 may transmit a notification message notifying that a new ISAC service has been created to the SNF 300. The service notification message may include information identifying the newly created ISAC service (e.g., an identifier identifying the ISAC service).

In step 326, the SNF 300 may update SNF 300-related information in the UDR 304. For example, the SNF 300 may store SNF-related information to provide the ISAC service (e.g., SNF identifier, SNF address, etc.) in the UDR.

In step 328, the SNF 300 may notify a UE 301 that an ISAC service has been created. The notification message may include generated ISAC service-related information (e.g., at least one of the ISAC service profile illustrated in Table 1). The UE receiving the notification message in step 328 may be one or more UEs. For example, the UE receiving the notification message in step 328 may be at least one of UEs corresponding to a sensor identifier, a service provider identifier, and a service consumer identifier among the ISAC service profile illustrated in Table 1. The UE receiving the notification message in step 328 may store the received ISAC service-related information.

According to an embodiment of the disclosure, integrated sensing and communication service-related information may be stored in the network through the procedure illustrated in FIG. 3. As another method, integrated sensing service-related information (ISAC profile) may be configured in the UDR, UDM, SNF, etc. through OAM.

A mobile communication network according to an embodiment of the disclosure may update at least one of the ISAC service profile information (e.g., service area, service time, sensor-related information, service consumer identifier, energy consumption mode, etc.) using the procedure illustrated in FIG. 3. Referring to FIG. 3, in step 310, the AF 308 serving as a service provider may transmit an update request message to the NEF/SNF 306 of the 5G core network. The update request message may be a request message for updating at least one value of the ISAC service profile. The update request message may include an identifier of the AF. Further, the update request message may include at least one of the ISAC profile illustrated in Table 1 (e.g., ISAC service identifier).

In step 312, the NEF/SNF 306 may authenticate the update request message received from the AF 308 in step 310. This may be performed similarly to the creation request message authentication.

In step 312, upon successful authentication, the NEF/SNF 306 may determine to update the ISAC service profile corresponding to the ISAC service requested by the AF. In step 318, the NEF/SNF 306 may store the ISAC service-related update information received in step 310 in the UDR 304.

In step 320, the NEF/SNF may identify sensor information, service provider, or service consumer information related to the updated ISAC service. If there is sensor, service provider, or service consumer information related to the ISAC service, in step 320, the NEF/SNF may update subscriber information identified by/corresponding to the sensor, service provider, or service consumer information. For example, the NEF/SNF may store at least one of the ISAC service profile (e.g., service type, identifier identifying the ISAC service, etc.) associated with/used by the subscriber in the subscription information of the subscriber identified by the sensor, service provider, or service consumer information.

In step 322, the SNF/NEF may send an update response message to the AF to notify that the update request message requested in step 310 has been processed. The update response message may include information identifying the updated ISAC service (e.g., an identifier identifying the ISAC service).

If an SNF 300 different from the NEF/SNF 306 is to provide the corresponding ISAC service, in step 324, the NEF/SNF 306 or the UDR 304 may transmit a notification message notifying that the ISAC service information has been updated to the SNF 300. The service notification message may include information identifying the updated ISAC service (e.g., an identifier identifying the ISAC service). Further, the service notification message may also include updated ISAC service information.

In step 328, the SNF 300 may notify the UE 301 that the ISAC service has been updated. The notification message may include updated ISAC service-related information (e.g., at least one of the ISAC service profile illustrated in Table 1). The UE receiving the notification message in step 328 may be one or more UEs. For example, the UE receiving the notification message in step 328 may be at least one of UEs corresponding to a sensor identifier, a service provider identifier, and a service consumer identifier among the ISAC service profile illustrated in Table 1. The UE receiving the notification message in step 328 may update the ISAC service-related information stored in the UE.

According to an embodiment of the disclosure, ISAC service profile information may be determined using AI technology. For example, the mobile communication system may determine/update ISAC service profile information based on analytics information of the NWDAF.

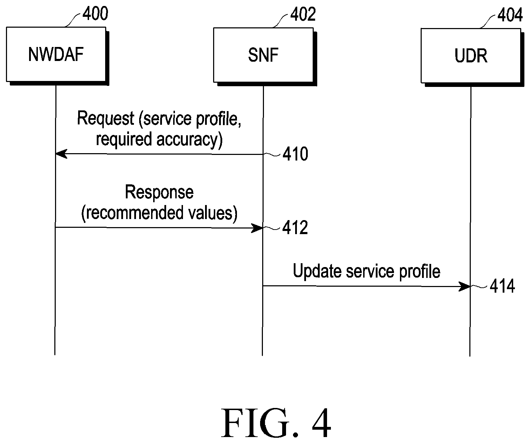

FIG. 4 illustrates a procedure for determining ISAC service profile information using AI technology in a wireless communication system according to an embodiment of the disclosure.

Referring to FIG. 4, in step 410, an SNF 402 may transmit a request message to an NWDAF 400. The request message may be a request message for setting at least one value (e.g., maximum number of sensors, minimum number of sensors, sensor installation location, etc.) of the ISAC service profile parameter illustrated in Table 1. The request message may include ISAC service-related information, i.e., at least one of the ISAC service profile illustrated in Table 1 (e.g., service type, service area, service time, energy consumption mode, etc.). Further, the request message may include an accuracy of the required ISAC service analysis result value. Further, the request message may include ISAC service profile information desired to be analyzed (e.g., maximum number of sensors, minimum number of sensors, sensor installation location, etc.).

The NWDAF 400 may determine an ISAC service profile parameter value capable of satisfying the accuracy of the required ISAC service analysis result value based on at least one of network information collected from another NF, ISAC service-related information, information configured from OAM, and the ISAC service information received in step 410. For example, the NWDAF 400 may determine a minimum number of sensors capable of satisfying the required accuracy. The NWDAF 400 may determine an optimized installation location of a sensor for satisfying the required accuracy. The NWDAF 400 may determine a maximum number of sensors for energy saving. In step 412, the NWDAF 400 may transmit the determined ISAC service profile parameter value to the SNF 402.

In step 414, the SNF 402 may update the ISAC service profile information stored in the UDR 404 with the value received from the NWDAF 400. The update service profile message of step 414 may include at least one of an ISAC service identifier and the ISAC service profile parameter value received from the NWDAF in step 412.

According to an embodiment of the disclosure, updated integrated sensing and communication service-related information may be stored in the network through the procedure illustrated in FIG. 3 or FIG. 4. As another method, updated integrated sensing service-related information (ISAC profile) may be configured in the UDR, UDM, SNF, etc. through OAM.

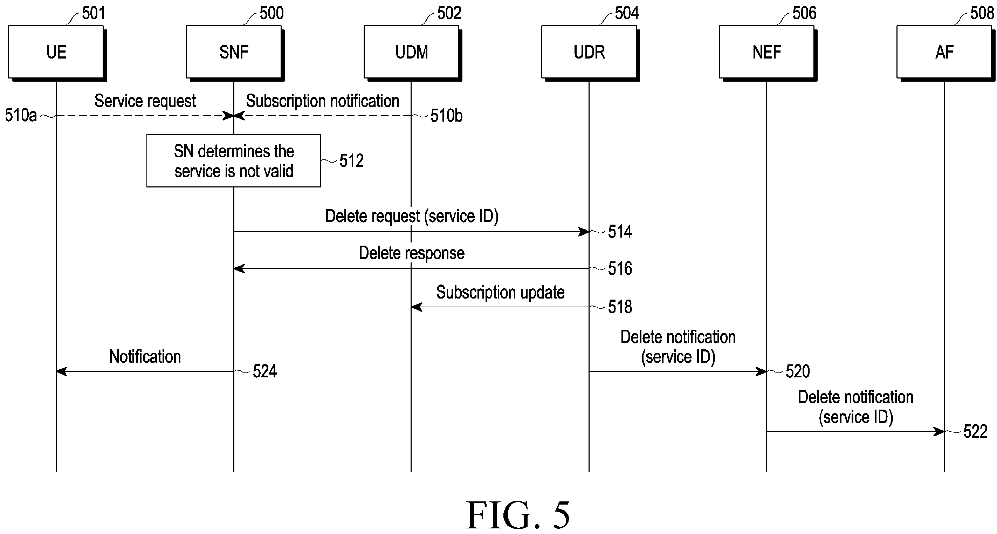

FIG. 5 illustrates a procedure for deleting ISAC service profile information triggered by an SNF in a wireless communication system according to an embodiment of the disclosure.

In step 510, an SNF 500 may receive an ISAC service-related message. Based on the message received in step 510, the SNF may determine in step 512 that the ISAC service is no longer valid.

For example, the SNF may receive an ISAC service start/activation request message 510a. The SNF may validate the ISAC service. If the ISAC service is no longer valid, the SNF may determine to delete the ISAC service profile.

Alternatively, the SNF may receive a subscription information update message 510b. The subscription information update message may be a message notifying a change in the subscription information of the service provider. If the ISAC service is no longer valid in the subscription information of the service provider, the SNF may determine to delete the ISAC service profile.

In step 514, the SNF 500 may transmit a deletion request message to the UDR 504. The deletion request message may include an ISAC service identifier. Further, the deletion request message may also include at least one of the ISAC service profile illustrated in Table 1. The UDR 504 may delete the ISAC service profile information identified by the ISAC service identifier.

In step 516, the UDR 504 may transmit a deletion response message. The SNF 500 receiving the deletion response message may know that the ISAC service profile deletion requested in step 514 has been processed.

The UDR 504 may identify sensor information, service provider, or service consumer information related to the deleted ISAC service profile. If there is sensor, service provider, or service consumer information related to the ISAC service, in step 518, the UDR may update subscriber information identified by/corresponding to the sensor, service provider, or service consumer information. For example, the UDR 504 may delete ISAC service-related information associated with/used by the subscriber from the subscription information of the subscriber identified by the sensor, service provider, or service consumer information.

In steps 520 to 522, the UDR 504 may transmit a notification message notifying that the ISAC service profile has been deleted to an AF 508. The deletion notification message may be transmitted to the AF 508 through an NEF 506. The deletion notification message may include deleted ISAC service-related information, e.g., at least one of the ISAC service profile information illustrated in Table 1 (e.g., ISAC service identifier).

The AF 508 receiving the deletion notification message of step 522 may know that the ISAC service profile has been deleted and the corresponding ISAC service is no longer available/valid.

In step 524, the SNF 500 may notify the UE 501 that the ISAC service has been deleted. The notification message may include deleted ISAC service-related information (e.g., at least one of the ISAC service profile illustrated in Table 1). The UE receiving the notification message in step 524 may be one or more UEs. For example, the UE receiving the notification message in step 524 may be at least one of UEs corresponding to a sensor identifier, a service provider identifier, and a service consumer identifier among the ISAC service profile illustrated in Table 1. The UE receiving the notification message in step 524 may delete the ISAC service-related information stored in the UE.

A mobile communication network according to an embodiment of the disclosure may delete (AF triggered) ISAC service profile information using the procedure illustrated in FIG. 3. Referring to FIG. 3, in step 310, the AF 308 serving as a service provider may transmit a deletion request message to the NEF/SNF 306 of the 5G core network. The deletion request message may be a request message for deleting the ISAC service profile information stored in the network. The deletion request message may include an identifier of the AF. Further, the deletion request message may include at least one of the ISAC profile illustrated in Table 1 (e.g., ISAC service identifier).

In step 312, the NEF/SNF 306 may authenticate the deletion request message received from the AF 308 in step 310. This may be performed similarly to the creation request message authentication.

In step 312, upon successful authentication, the NEF/SNF 306 may determine to delete the ISAC service profile corresponding to the ISAC service requested by the AF. In step 318, the NEF/SNF 306 may delete the ISAC service-related information (e.g., ISAC service profile) stored in the UDR 304.

In step 320, the NEF/SNF may identify sensor information, service provider, or service consumer information related to the deleted ISAC service. If there is sensor, service provider, or service consumer information related to the deleted ISAC service, in step 320, the NEF/SNF may update subscriber information identified by/corresponding to the sensor, service provider, or service consumer information. For example, the NEF/SNF may delete the corresponding ISAC service profile information from the subscription information of the subscriber identified by the sensor, service provider, or service consumer information.

In step 322, the SNF/NEF may send a deletion response message to the AF to notify that the deletion request message requested in step 310 has been processed. The deletion response message may include information identifying the deleted ISAC service (e.g., an identifier identifying the ISAC service).

If an SNF 300 different from the NEF/SNF 306 is to provide the corresponding ISAC service, in step 324, the NEF/SNF 306 or the UDR 304 may transmit a notification message notifying that the ISAC service information has been deleted to the SNF 300. The service notification message may include information identifying the deleted ISAC service (e.g., an identifier identifying the ISAC service). Further, the service notification message may also include deleted ISAC service information.

In step 328, the SNF 300 may notify the UE 301 that the ISAC service has been deleted. The notification message may include deleted ISAC service-related information (e.g., at least one of the ISAC service profile illustrated in Table 1). The UE receiving the notification message in step 328 may be one or more UEs. For example, the UE receiving the notification message in step 328 may be at least one of UEs corresponding to a sensor identifier, a service provider identifier, and a service consumer identifier among the ISAC service profile illustrated in Table 1. The UE receiving the notification message in step 328 may delete the ISAC service-related information stored in the UE.

According to an embodiment of the disclosure, integrated sensing and communication service-related information may be deleted from the network through the procedure illustrated in FIG. 3 or FIG. 5. As another method, integrated sensing service-related information (ISAC profile) configured in the UDR, UDM, SNF, etc. may be deleted through OAM.

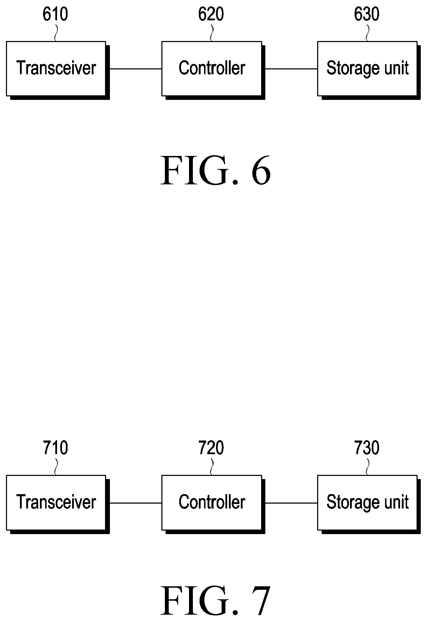

FIG. 6 is a block diagram illustrating a UE according to an embodiment of the disclosure.

In the embodiment of FIG. 6, the UE may be a UE or a UE device illustrated in each of FIGS. 1 to 5.

Referring to FIG. 6, the UE may include a transceiver 610, a controller 620, and a storage unit 630. In the disclosure, the controller may be defined as a circuit, an application-specific integrated circuit, or at least one processor.

The transceiver 610 may transmit and receive signals to/from a base station or a network entity. The transceiver 610 may transmit/receive data to/from the base station or the network entity using, e.g., wireless communication.

The controller 620 may control the overall operation of the UE according to an embodiment. For example, the controller 620 may control the signal flow between the blocks to perform the operations described in connection with FIGS. 1 to 5.

The storage unit 630 may store at least one of information transmitted and received through the transceiver 610 and information generated through the controller 620. For example, the storage unit 630 may store information and data necessary for the method described with reference to FIGS. 1 to 5, for example.

FIG. 7 is a block diagram illustrating a network entity according to an embodiment of the disclosure.

In the embodiment of FIG. 7, the network entity may be the base station or the network entity device shown in each of FIGS. 1 to 5.

Referring to FIG. 7, the network entity may include a transceiver 710, a controller 720, and a storage unit 730. In the disclosure, the controller may be defined as a circuit or an application specific integrated circuit or at least one processor.

The transceiver 710 may transmit and receive signals to/from the UE, the base station, or another network entity. The transceiver 710 may transmit/receive data to/from the UE, base station or the other network entity using, e.g., wireless communication.

The controller 720 may control an overall operation of the network entity according to an embodiment proposed in the disclosure. For example, the controller 720 may control the signal flow between the blocks to perform the operations described in connection with FIGS. 1 to 5.

The storage unit 730 may store at least one of information transmitted and received through the transceiver 710 and information generated through the controller 720. For example, the storage unit 730 may store information and data necessary for the method described with reference to FIGS. 1 to 5, for example.

## Claims

1. A method of operating a network entity in a wireless communication system, the method comprising:
receiving a request message for an integrated sensing and communication (ISAC) service from an application function (AF);
performing authentication for the ISAC service requested by the AF based on the request message; and
transmitting ISAC service-related information comprising at least one of an identifier identifying the ISAC service, ISAC profile information, or information on a sensing network function (SNF) selected by the network entity.

2. The method of claim 1, wherein the network entity is a network exposure function (NEF),
the network entity is an SNF, or
the network entity is a network function (NF) in which the NEF and the SNF are collocated.

3. The method of claim 1, further comprising:
transmitting a first message requesting subscription information to a unified data repository (UDR) or a unified data management (UDM); and
receiving a second message comprising service type information available to a subscriber from the UDR or the UDM.

4. The method of claim 1, further comprising transmitting a response message comprising information identifying a generated ISAC service to the AF.

5. The method of claim 1, wherein the ISAC profile information includes at least one of a service type for the ISAC service, a service area for the ISAC service, a service time for the ISAC service, sensor-related information installed in the service area, a maximum number of sensors for the ISAC service, a minimum number of sensors for the ISAC service, a service provider identifier for the ISAC service, a service consumer identifier for the ISAC service, an energy consumption mode for the ISAC service, frequency information for the ISAC service, or a privacy indicator for the ISAC service.

6. The method of claim 5, wherein the service type for the ISAC service indicates at least one of a service scenario, a service characteristic, or a required QoS.

7. The method of claim 5, wherein the service time for the ISAC service includes at least one of a start time of the ISAC service, an activation time of the ISAC service, an end time of the ISAC service, or a deactivation time of the ISAC service.

8. The method of claim 5, wherein the maximum number of sensors for the ISAC service indicates a number of sensors that do not cause a valid change in an analysis result value, and the minimum number of sensors for the ISAC service indicates a minimum number of sensors required to derive an analysis result value satisfying a required accuracy.

9. A network entity in a wireless communication system, the network entity comprising:
a transceiver; and
a controller, wherein the controller is configured to:
receive a request message for an integrated sensing and communication (ISAC) service from an application function (AF);
perform authentication for the ISAC service requested by the AF based on the request message; and
control to transmit ISAC service-related information comprising at least one of an identifier identifying the ISAC service, ISAC profile information, or information on a sensing network function (SNF) selected by the network entity.

10. The network entity of claim 9, wherein the network entity is a network exposure function (NEF),
the network entity is an SNF, or
the network entity is a network function (NF) in which the NEF and the SNF are collocated.

11. The network entity of claim 9, wherein the controller is configured to:
control to transmit a first message requesting subscription information to a unified data repository (UDR) or a unified data management (UDM); and
receive a second message comprising service type information available to a subscriber from the UDR or the UDM.

12. The network entity of claim 9, wherein the controller further includes an operation of transmitting a response message comprising information identifying a generated ISAC service to the AF.

13. The network entity of claim 9, wherein the ISAC profile information includes at least one of a service type for the ISAC service, a service area for the ISAC service, a service time for the ISAC service, sensor-related information installed in the service area, a maximum number of sensors for the ISAC service, a minimum number of sensors for the ISAC service, a service provider identifier for the ISAC service, a service consumer identifier for the ISAC service, an energy consumption mode for the ISAC service, frequency information for the ISAC service, or a privacy indicator for the ISAC service.

14. The network entity of claim 13, wherein the service type for the ISAC service indicates at least one of a service scenario, a service characteristic, or a required QoS.

15. The network entity of claim 13, wherein the service time for the ISAC service includes at least one of a start time of the ISAC service, an activation time of the ISAC service, an end time of the ISAC service, or a deactivation time of the ISAC service.
